# EUROPÄISCHE PATENTSCHRIFT

(11) **EP 3 616 993 B1**
(45) Veröffentlichungstag und Bekanntmachung des Hinweises auf die Patenterteilung: **24.05.2023**
(21) Anmeldenummer: 18191011.8
(22) Anmeldetag: 27.08.2018
(51) Int. Cl.: B60Q 1/068

(54) **KRAFTFAHRZEUGSCHEINWERFER MIT EINER EINSTELLVORRICHTUNG**
MOTOR VEHICLE HEADLAMP WITH AN ADJUSTING DEVICE
PHARE DE VÉHICULE AUTOMOBILE AVEC DISPOSITIF DE RÉGLAGE

(43) Veröffentlichungstag der Anmeldung: 04.03.2020
(73) Patentinhaber: ZKW Group GmbH, 3250 Wieselburg (AT)
(72) Erfinder: Kastner, Dieter, 3250 Wieselburg (AT); Leonhartsberger, Rudolf, 3393 Zelking (AT)
(74) Vertreter: Patentanwaltskanzlei Matschnig & Forsthuber OG

(56) Entgegenhaltungen:
- EP-A1- 2 786 897
- WO-A1-2013/025176
- DE-A1- 10 332 976
- DE-A1- 19 619 586
- DE-A1-102011 017 538
- FR-A1- 3 022 984

## Beschreibung

Die Erfindung betrifft einen Kraftfahrzeugscheinwerfer mit einem Gehäuse und zumindest einer optisch relevanten Baueinheit sowie mit zumindest einer Einstellvorrichtung zur Einstellung der optisch relevanten Baueinheit des Kraftfahrzeugscheinwerfers, welche Einstellvorrichtung Folgendes umfasst:
- eine Antriebsvorrichtung mit einem um eine Verschubachse drehbar gelagerten Übertragungselement,
- ein mit dem Übertragungselement mittels einer Verbindung in mechanischem Eingriff stehendes Stellelement, wobei das Stellelement einen Gewindeabschnitt aufweist und ferner dazu eingerichtet ist, an der optisch relevanten Baueinheit mittels einem Kopplungselement anzugreifen, und
eine Führungsaufnahme sowie ein in der Führungsaufnahme angeordnetes Führungsteil mit einem den Gewindeabschnitt korrespondierenden Gegengewinde, wobei das Stellelement mittels des auf den Gewindeabschnitt anbringbaren Führungsteils, welches in Kombination mit dem Gewindeabschnitt dazu eingerichtet ist, eine Drehbewegung des Übertragungselements in eine Schiebebewegung entlang der Verschubachse zu wandeln, in der Führungsaufnahme dreh- und verschiebbar gelagert ist.

Ein solcher Kraftfahrzeugscheinwerfer ist zum Beispiel aus DE 10 2011 017538 A1 bekannt.

Zur gesetzeskonformen Einstellung des mit einem Scheinwerfer erzeugten Lichtbildes ist es notwendig, dass ein oder mehrere optisch relevante Baueinheiten des Scheinwerfers unter anderem in Höhenrichtung und/oder seitlich einstellbar sind. Bei einer solchen relevanten optischen Baueinheit handelt es sich beispielsweise um ein Lichtmodul, etwa bestehend aus zumindest einer Lichtquelle, zumindest einem Reflektor, zumindest einer Linse etc.; es kann sich aber auch um einzelne Bauteile wie Reflektoren, Linsen etc. handeln, die entsprechend verstellt werden.

Dabei ist die zumindest eine optisch relevante Baueinheit häufig um eine oder mehrere Achsen, beispielsweise um eine horizontale und/oder vertikale Achse verschwenkbar in dem Scheinwerfer gelagert. Beispielsweise sind eine oder mehrere Lichtmodule an einem Tragerahmen gelagert, und der Tragerahmen ist um eine oder zwei Achsen, wie vorstehend beschrieben, verschwenkbar gelagert.

Einstellvorrichtungen zur Einstellung von optisch relevanten Baueinheiten von Kraftfahrzeugscheinwerfern, wie beispielsweise Lichtquellen, Reflektoren und/oder Linsen, erlauben eine Anpassung des durch den Scheinwerfer erzeugten Lichtbildes an vorgegebene Anforderungen. Dies erlaubt es, Abweichungen von Sollvorgaben, die beispielsweise nach einem Einbauvorgang des Scheinwerfers in ein Kraftfahrzeug festgestellt werden, nachträglich durch Verwendung einer Einstellvorrichtung ausgeglichen werden können. Eine typische Aufgabe von Einstellvorrichtungen liegt in der Anpassung der Leuchtweite eines Scheinwerfers, wobei dieses technische Gebiet insbesondere unter dem Ausdruck "Leuchtweitenregulierung" - kurz LWR genannt - bekannt geworden ist.

Zur Verstellung ist in der Regel zumindest eine Antriebsvorrichtung vorgesehen, wobei die Antriebsvorrichtung üblicherweise manuell betätigbar ist, beispielsweise umfasst die Antriebsvorrichtung ein Drehrad bzw. eine Einstellschraube, deren Drehbewegung über eine geeignete Mechanik in eine Linearbewegung eines Gleitelements umgesetzt wird, welches in entsprechenden Gleitbahnen in dem Scheinwerfergehäuse verschiebbar geführt ist. Ein Verstellpunkt der optisch relevanten Baueinheit, z.B. des Tragerahmens, an welchem die Baueinheit angebracht ist, ist in dem Gleitelement gelagert, sodass bei einem Verschieben des Gleitelements die Baueinheit bzw. der Tragerahmen verschwenkt werden.

Es ist eine Aufgabe der Erfindung eine verbesserte Einstellvorrichtung zur Einstellung einer optisch relevanten Baueinheit eines Kraftfahrzeugscheinwerfers bereitzustellen.

Diese Aufgabe wird dadurch gelöst, dass der Kraftfahrzeugscheinwerfer die Merkmale des Anspruchs 1 umfasst.

Vorteilhafterweise kann das Stellelement zumindest teilweise in einer im Wesentlichen kreisförmigen, konzentrisch zur Verschubachse angeordneten Öffnung des Übertragungselements aufgenommen sein, wobei das Übertragungselement als Überdrehschutz elastische Zungen aufweist, die am Umfang der im Wesentlichen kreisförmigen Öffnung angeordnet sind und sich entlang der Verschubachse erstrecken, wobei die elastischen Zungen weitere Vorsprünge aufweisen, die dazu eingerichtet sind, in auf dem Stellelement angeordnete, korrespondierende Vertiefungen einzugreifen.

Wie bereits erwähnt ist die das Übertragungselement mit dem Stellelement verbindende Verbindung dazu eingerichtet, eine Drehbewegung des Übertragungselements in eine Schiebebewegung des Stellelements entlang der Verschubachse relativ zu dem Übertragungselement zu wandeln.

Das Stellelement greift dergestalt an einer optisch relevanten Baueinheit an, dass eine Bewegung des Stellelements in eine geänderte Ausrichtung der optisch relevanten Baueinheit gewandelt werden kann. Bei der optisch relevanten Baueinheit kann es sich beispielsweise um Blenden(anordnungen), Lichtquellen, Reflektoren, Linsen, ganze Lichtmodule bzw. Baugruppen, etc. handeln. Ebenso ist es möglich, dass eine optisch relevante Baueinheit in einer Verstellmechanik, beispielsweise in einem schwenkbar gelagerten Tragerahmen, aufgenommen ist. Unter dem Ausdruck "dass das Stellelement dazu eingerichtet, an der optisch relevanten Baueinheit anzugreifen" wird daher auch eine Anordnung verstanden, in der das Stellelement indirekt, beispielsweise über eine Verstellmechanik) an der optisch relevanten Baueinheit angreift.

Der Maximal- sowie der Minimalhub des Stellelements entlang der Verschubachse in Bezug auf das Übertragungselement wird durch den zumindest einen am Stellelement angeordneten Vorsprung und den zwei dazu korrespondierenden, an der Führungsaufnahme angeordneten Anschlägen begrenzt.

Die Führungsaufnahme ist als von den restlichen Bauteilen der Einstellvorrichtung getrennt ausgebildet und ist in Bezug auf die Antriebsvorrichtung fixiert, beispielsweise an einem Kraftfahrzeugscheinwerfergehäuse.

Für gewünschte Änderungen der auszuführenden Hublänge des Stellelements braucht dementsprechend lediglich die Führungsaufnahme ausgetauscht werden bei sonst gleichbleibenden Komponenten der Einstellvorrichtung.

Weiters wird die Feinjustierung der Bewegung des Stellelements entlang der Verschubachse durch die Gewindesteigung des Gewindeabschnitts des Stellelements und des dazu korrespondierenden Gegengewindes der Führungsteils, d.h. dass für jede bestimmte Gewindesteigung eines Stellelements ein eigenes Führungsteil vorgesehen sein kann. Hierzu kann vorgesehen sein, dass das Führungsteil lösbar in der Führungsaufnahme angeordnet ist.

Dies bringt den Vorteil, dass die Einstellvorrichtung variabel bleibt im Hinblick auf die oben beschriebene Feinjustierung, d.h. unterschiedliche Stellelemente und dazu korrespondierenden Führungsteilen mit der Führungsaufnahme kombinierbar sind.

Mit anderen Worten ist die Übersetzung der Drehbewegung der Antriebsvorrichtung über die Gewindesteigung des Stellelements und dem dazu korrespondierenden Führungsteil bestimmt, und diese Übersetzung kann, wie oben beschrieben, durch ein einfaches Austauschen des Stellelements und des Führungsteils variabel verändert werden ohne dass andere Komponenten der Einstellvorrichtung verändert werden müssen.

Wie oben bereits erwähnt ist das Stellelement dazu eingerichtet, an die optisch relevante Baueinheit anzugreifen. Zu diesem Zweck weist das Stellelement ein Kopplungselement auf, der vorzugsweise als konzentrisch zur Verschubachse angeordneter Kugelkopf ausgebildet ist.

Hierzu kann weiters ein Verbindungsteil zwischen dem Kopplungselement des Stellelements und der einzustellenden, optisch relevanten Baueinheit vorgesehen sein, wobei das Verbindungsteil als von der optischen Baueinheit getrennt ausgebildet sein kann. Durch die Erfindung ist es möglich, eine besonders robuste und fein justierbare Einstellvorrichtung zu erhalten, die kostengünstig realisierbar ist und innerhalb der Einstellvorrichtung auftretende Kräfte weitgehend minimiert.

Vorteilhafterweise können die weitere Vorsprünge in Form von achsenparallelen Zapfen und die dazu korrespondierenden Vertiefungen als achsenparallele Rillen ausgeführt sein.

Es kann günstig sein, wenn die Antriebsvorrichtung als mechanischer Motor, vorzugsweise mit einem Winkelgetriebe, ausgebildet ist.

Ebenso kann es günstig sein, wenn die Antriebsvorrichtung als Elektromotor ausgebildet ist.

Vorteilhafterweise kann das Kopplungselement durch einen konzentrisch zur Verschubachse angeordneten Kugelkopf gebildet sein.

Es kann vorgesehen sein, dass das Kopplungselement als von dem Stellelement lösbare Schraube ausgebildet ist.

Es kann besonders günstig sein, wenn die Führungsaufnahme mit dem Gehäuse des Kraftfahrzeugscheinwerfers fest verbunden ist.

Nachfolgend wird die Erfindung anhand von beispielhaften Zeichnungen näher erläutert. Hierbei zeigt
Fig. 1 eine perspektivische Ansicht einer Einstellvorrichtung zur Einstellung einer optisch relevanten Baueinheit eines Kraftfahrzeugscheinwerfers,
Fig. 2 eine Explosionsansicht der Einstellvorrichtung aus Fig. 1,
Fig. 3 einen seitlichen Querschnitt durch die Einstellvorrichtung aus Fig. 1,
Fig. 3a einen Querschnitt entlang einer Schnittebene B-B aus Fig. 3,
Fig. 4 eine perspektivische Ansicht eines weiteren Beispiels einer Einstellvorrichtung mit einem Elektromotor als Antriebsvorrichtung, und
Fig. 5 eine weitere perspektivische Ansicht des Beispiels aus Fig. 4.

Grundsätzlich kann es sich bei der optisch relevanten Baueinheit aber um ein Einzelteil eines Kraftfahrzeugscheinwerfers oder einer Leuchteinheit, etwa um einen Reflektor, eine Linse, eine Lichtquelle, eine Blendenanordnung etc. handeln, oder die optisch relevante Baueinheit umfasst ein oder mehrere solcher Bauteile oder ein oder mehrere Leuchteinheiten auf einem gemeinsamen Träger, der verschwenkbar ist.

Im Folgenden wird der Einfachheit halber von einem Lichtmodul als optisch relevante Baueinheit ausgegangen.

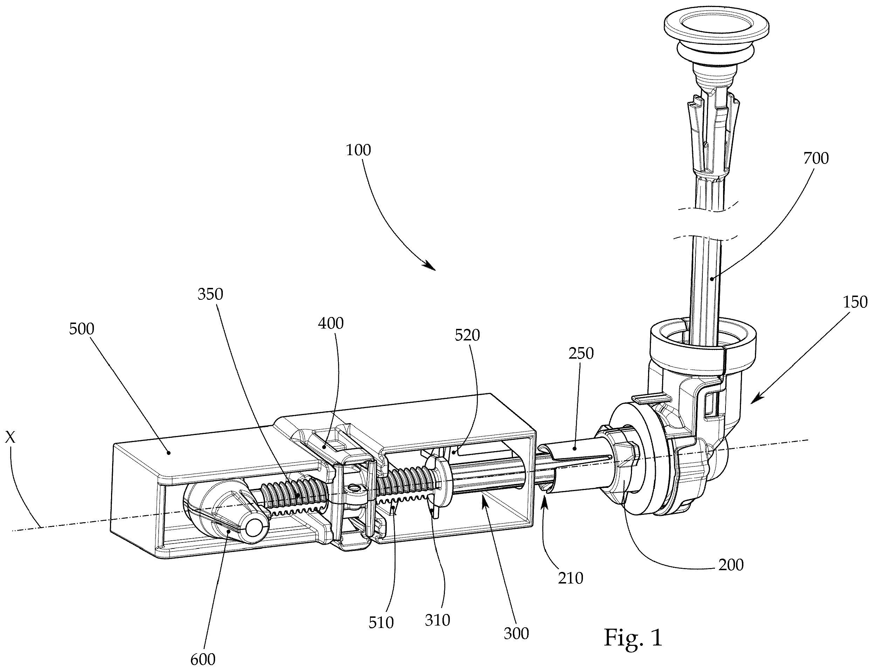

Wie insbesondere den **Figuren 1** bis **3** entnommen werden kann, umfasst die Einstellvorrichtung **100** ein Stellelement **300,** das vorzugsweise als Stellstange ausgebildet ist, wobei das Stellelement **300** mit einem Verbindungsteil **600** verbunden ist, das als mechanische Verbindung zwischen dem Kopplungselement **360** des Stellelements **300** und der einzustellenden, optisch relevanten Baueinheit fungiert, wobei das Verbindungsteil **600** als von der optischen Baueinheit, welche nicht in den Figuren dargestellt ist, getrenntes Bauteil ausgebildet ist.

Das Verbindungsteil **600** weist in der in den Figuren dargestellten Ausführungsform einen Gelenksabschnitt auf, mit welchem das Stellelement **300** mit seinem als Kugelkopf ausgebildeten Kopplungselement **360** gelenkig verbunden ist.

Die Antriebsvorrichtung **150,** welche vorzugsweise an einem Scheinwerfergehäuse gelagert sein kann, ist beispielsweise manuell betätigbar und umfasst in dem in den Figuren gezeigten Ausführungsbeispiels eine Einstellschraube **700,** deren Drehbewegung in bekannter Weise in eine Drehbewegung eines Übertragungselements **200** umgesetzt wird, das um eine Verschubachse **X** drehbar gelagert ist.

Das Übertragungselement **200** weist zudem eine Öffnung **210** auf, in welche das Stellelement **300** teilweise eingeschoben ist. Durch die Querschnittsausgestaltung der Öffnung **210** des Übertragungselements **200** und des entsprechenden dazu korrespondierenden Abschnitts des Stellelements **300** kann das Stellelement **300** um eine Verschubachse X gedreht werden, d.h. dass bei einer Drehbewegung des Übertragungselements **200** das Stellelement **300** ebenfalls mit verdreht wird.

Hierzu weist das Übertragungselement elastische Zungen **250** auf, die am Umfang der im Wesentlichen kreisförmigen Öffnung **210** angeordnet sind und sich entlang der Verschubachse **X** erstrecken, wobei die elastischen Zungen **250** weitere Vorsprünge **260** aufweisen, die dazu eingerichtet sin, in auf dem Stellelement angeordnete, korrespondierende Vertiefungen **320** einzugreifen.

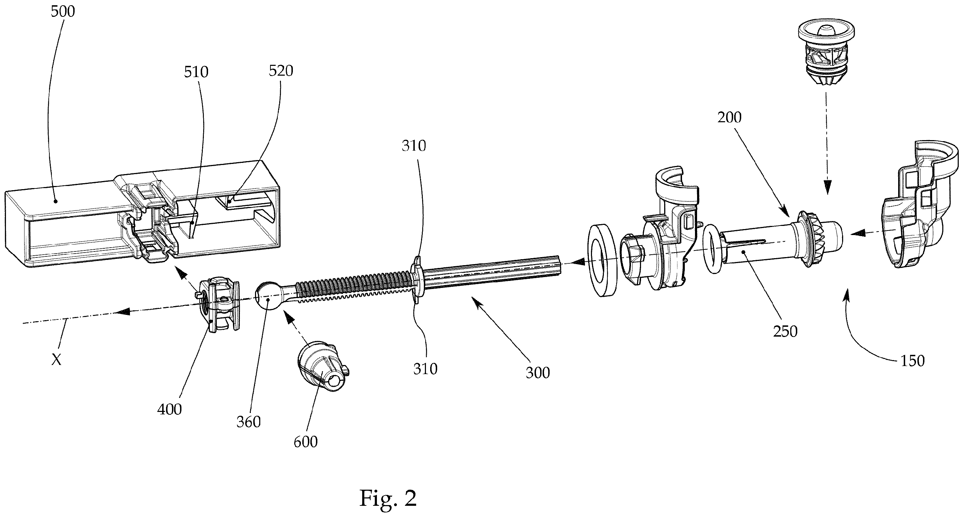

Die weiteren Vorsprünge **260** können beispielsweise in Form von zur Verschubachse **X** achsenparallelen Zapfen und die dazu korrespondierenden Vertiefungen **320** in Form von achsenparallelen Rillen ausgeführt sein, wie in **Fig. 1** und **2** angedeutet ist.

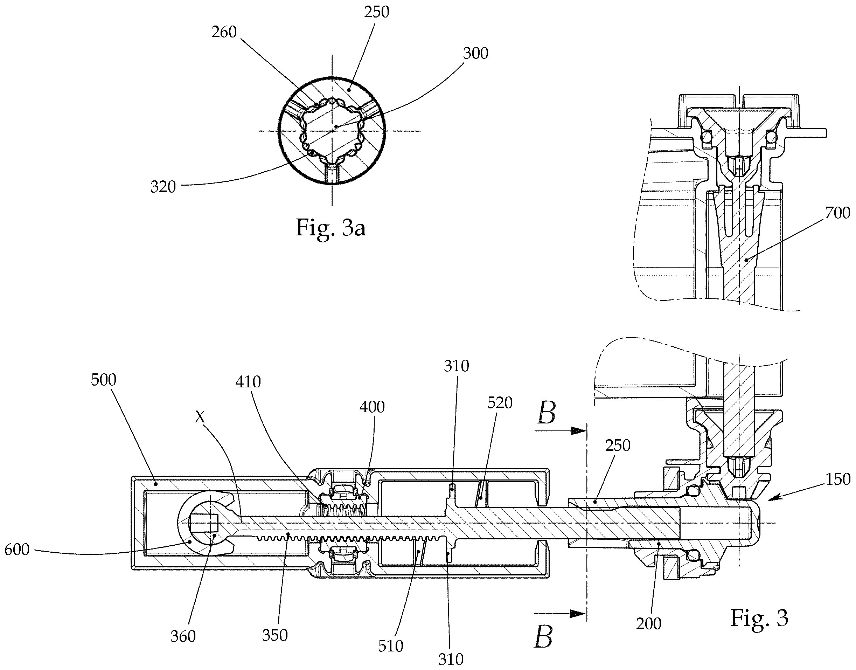

Einen Querschnitt der Schnittebene B-B aus **Fig. 3** der oben beschriebenen mechanischen Verbindung zwischen dem Stellelement und dem Übertragungselement ist in **Fig. 3a** gezeigt. Im zusammengebauten Zustand ist das Stellelement **300** in der Öffnung **210** des Übertragungselements **200** aufgenommen, wobei die weiteren Vorsprünge **260** in die Vertiefungen **320** dergestalt eingreifen, dass eine Verschiebung des Stellelements **300** in Bezug auf das Übertragungselement **200** entlang der Verschubachse **X** möglich ist.

Eine Drehbewegung des Übertragungselements **200** um die Verschubachse **X** wird über die weiteren Vorsprünge **260** mittels der Vertiefungen **320** auf das Stellelement **300** übertragen, sofern das dabei übertragene Drehmoment ein maximales Begrenzungsdrehmoment nicht überschreitet.

Ist beispielsweise der Maximalhub des Stellelements **300** in Bezug auf das Übertragungselement **200** erreicht, so kann eine mechanische Überlastung ihrer Verbindung verhindert werden, indem sich ab einem definierten Drehmoment die elastischen Zungen **250** derart verformen, dass die weiteren Vorsprünge **260** aus den korrespondierenden Vertiefungen **320** gleiten und ein "Durchdrehen" des Übertragungselements **200** in Bezug auf das Stellelement **300** ermöglichen.

Weiters weist das Stellelement **300** einen Gewindeabschnitt **350** auf, mittels welchem das Stellelement **300** mit einem ein zum Gewindeabschnitt **350** des Stellelements **300** korrespondierenden Gegengewinde **410** aufweisendes Führungsteil **400** um seine Längsachse bzw. der Verschubachse **X** drehbar gelagert ist, wobei das Führungsteil **400** in Bezug auf die Antriebsvorrichtung **150** feststehend in einer Führungsaufnahme **500** angeordnet ist.

Das Führungsteil **400** ist in dem in den Figuren gezeigten Ausführungsbeispiel lösbar bzw. austauschbar an der Führungsaufnahme **500** befestigt.

Die Führungsaufnahme **500** ist beispielsweise mit einem Scheinwerfergehäuse fest verbunden ist und beispielsweise mittels Schrauben angeschraubt.

Zudem weist die Führungsaufnahme **500** einen ersten und einen zweiten Anschlag **510, 520** auf, die in Verbindung mit zwei an dem Stellelement **300** angeordneten, radial zur Verschubachse **X** vorragenden Vorsprüngen **310** die Schubbewegung des Stellelements **300** entlang der Verschubachse **X** begrenzen.

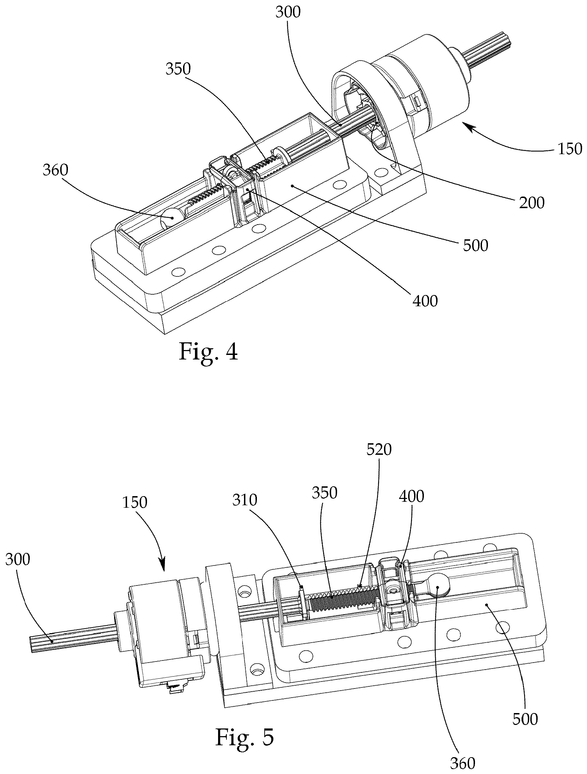

**Fig. 4** zeigt eine weitere beispielhafte Ausführungsform der Einstellvorrichtung mit einem Elektromotor als Antriebsvorrichtung **150** in einer perspektivischen Ansicht, wobei die übrigen Merkmale im Wesentlichen identisch sind zu den Beispielen aus **Fig. 1** bis **3a****.**

**Fig. 5** die Ausführungsform der Einstellvorrichtung aus **Fig. 4** in einer weiteren perspektivischen Ansicht.

**BEZUGSZEICHENLISTE**

| | |
|---|---|
| Einstellvorrichtung | 100 |
| Antriebsvorrichtung | 150 |
| Verschubachse | X |
| Übertragungselement | 200 |
| Öffnung | 210 |
| Elastische Zungen | 250 |
| Weitere Vorsprünge | 260 |
| Stellelement | 300 |
| Vorsprung | 310 |
| Vertiefungen | 320 |
| Gewindeabschnitt | 350 |
| Kopplungselement | 360 |
| Führungsteil | 400 |
| Gegengewinde | 410 |
| Führungsaufnahme | 500 |
| Erster und zweiter Anschlag | 510, 520 |
| Verbindungsteil | 600 |
| Einstellschraube | 700 |

## Patentansprüche

1. Kraftfahrzeugscheinwerfer mit einem Gehäuse und zumindest einer optisch relevanten Baueinheit sowie mit zumindest einer Einstellvorrichtung (100) zur Einstellung der optisch relevanten Baueinheit des Kraftfahrzeugscheinwerfers, welche Einstellvorrichtung Folgendes umfasst:
- eine Antriebsvorrichtung (150) mit einem um eine Verschubachse (X) drehbar gelagerten Übertragungselement (200),
- ein mit dem Übertragungselement (200) mittels einer Verbindung in mechanischem Eingriff stehendes Stellelement (300), wobei das Stellelement (300) einen Gewindeabschnitt (350) aufweist und ferner dazu eingerichtet ist, an der optisch relevanten Baueinheit mittels einem Kopplungselement (360) anzugreifen, und
- eine Führungsaufnahme (500) sowie ein in der Führungsaufnahme (500) angeordnetes Führungsteil (400) mit einem den Gewindeabschnitt (350) korrespondierenden Gegengewinde (410), wobei das Stellelement (300) mittels des auf den Gewindeabschnitt (350) angeordneten Führungsteils (400), welches in Kombination mit dem Gewindeabschnitt (350) dazu eingerichtet ist, eine Drehbewegung des Übertragungselements (200) in eine Schiebebewegung entlang der Verschubachse (X) zu wandeln, in der Führungsaufnahme (500) dreh- und verschiebbar gelagert ist,
wobei das Stellelement (300) zumindest einen radial zur Verschubachse (X) vorragenden Vorsprung (310) aufweist, **dadurch gekennzeichnet, dass** die Führungsaufnahme (500) einen ersten und einen zweiten, zum Vorsprung (310) korrespondierenden Anschlag (510, 520) aufweist, wobei die Anschläge (510, 520) derart an der Führungsaufnahme (500) angeordnet sind, dass eine vorgegebene Hublänge des Stellelements (300) entlang der Verschubachse (X) ausgebildet wird, wobei das Führungsteil (400) in Bezug auf das Gehäuse des Kraftfahrzeugscheinwerfers feststehend angeordnet ist, und wobei
die Führungsaufnahme (500) als von den restlichen Bauteilen der Einstellvorrichtung (100) getrennt ausgebildet ist und in Bezug auf die Antriebsvorrichtung (150) fixiert ist.

2. Kraftfahrzeugscheinwerfer nach Anspruch 1, **dadurch gekennzeichnet, dass** das Stellelement (300) zumindest teilweise in einer im Wesentlichen kreisförmigen, konzentrisch zur Verschubachse angeordneten Öffnung (210) des Übertragungselements (200) aufgenommen ist, wobei das Übertragungselement (200) als Überdrehschutz elastische Zungen (250) aufweist, die am Umfang der im Wesentlichen kreisförmigen Öffnung (210) angeordnet sind und sich entlang der Verschubachse (X) erstrecken, wobei die elastischen Zungen (250) weitere Vorsprünge (260) aufweisen, die dazu eingerichtet sind, in auf dem Stellelement angeordnete, korrespondierende Vertiefungen (320) einzugreifen.

3. Kraftfahrzeugscheinwerfer nach Anspruch 1 oder 2, **dadurch gekennzeichnet, dass** die weiteren Vorsprünge (260) in Form von achsenparallelen Zapfen und die dazu korrespondierenden Vertiefungen (320) als achsenparallele Rillen ausgeführt sind.

4. Kraftfahrzeugscheinwerfer nach Anspruch 1 bis 3, **dadurch gekennzeichnet, dass** das Führungsteil (400) lösbar in der Führungsaufnahme (500) angeordnet ist.

5. Kraftfahrzeugscheinwerfer nach einem der Ansprüche 1 bis 4, **dadurch gekennzeichnet, dass** die Antriebsvorrichtung (150) als mechanischer Motor, vorzugsweise mit einem Winkelgetriebe, ausgebildet ist.

6. Kraftfahrzeugscheinwerfer nach einem der Ansprüche 1 bis 4, **dadurch gekennzeichnet, dass** die Antriebsvorrichtung (150) als Elektromotor ausgebildet ist.

7. Kraftfahrzeugscheinwerfer nach einem der Ansprüche 1 bis 6, **dadurch gekennzeichnet, dass** das Kopplungselement (360) durch einen konzentrisch zur Verschubachse (X) angeordneten Kugelkopf gebildet ist.

8. Kraftfahrzeugscheinwerfer nach einem der Ansprüche 1 bis 7, **dadurch gekennzeichnet, dass** das Kopplungselement (360) als von dem Stellelement (300) lösbare Schraube ausgebildet ist.

9. Kraftfahrzeugscheinwerfer nach einem der Ansprüche 1 bis 8, **dadurch gekennzeichnet, dass** die Führungsaufnahme (500) mit dem Gehäuse des Kraftfahrzeugscheinwerfers fest verbunden ist.

## Claims

1. Motor vehicle headlamp having a housing and at least one optically relevant structural unit and having at least one adjusting device (100) for adjusting the optically relevant structural unit of the motor vehicle headlamp, which adjusting device comprises the following:
- a drive device (150) with a transmission element (200) rotatably mounted about a displacement axis (X),
- an adjusting element (300) mechanically engaged with the transmission element (200) by means of a connection, the adjusting element (300) having a threaded portion (350) and being further adapted to engage the optically relevant assembly by means of a coupling element (360), and
- a guide receptacle (500) as well as a guide part (400) arranged in the guide receptacle (500) and having a mating thread (410) corresponding to the threaded portion (350), wherein the actuating element (300) is rotatably and displaceably mounted in the guide receptacle (500) by means of the guide part (400) arranged on the threaded portion (350), which guide part (400), in combination with the threaded portion (350), is arranged to convert a rotational movement of the transmission element (200) into a displacement movement along the displacement axis (X),
wherein
the actuating element (300) has at least one projection (310) projecting radially with respect to the displacement axis (X), **characterized in that** the guide receptacle (500) has a first and a second stop (510, 520) corresponding to the projection (310), the stops (510, 520) being arranged on the guide receptacle (500) in such a way that a predetermined stroke length of the actuating element (300) is formed along the displacement axis (X), wherein
the guide part (400) is arranged fixed with respect to the housing of the motor vehicle headlamp, and wherein
the guide receptacle (500) is designed as separate from the remaining components of the adjustment device (100) and is fixed with respect to the drive device (150).

2. Motor vehicle headlamp according to claim 1, **characterized in that** the adjusting element (300) is at least partially accommodated in a substantially circular opening (210) of the transmission element (200), which opening is arranged concentrically with respect to the displacement axis, the transmission element (200) having, as protection against overwinding, elastic tongues (250) which are arranged on the circumference of the essentially circular opening (210) and extend along the displacement axis (X), the elastic tongues (250) having further projections (260) which are designed to engage in corresponding recesses (320) arranged on the actuating element.

3. Motor vehicle headlamp according to claim 1 or 2, **characterized in that** the further projections (260) are designed in the form of pins parallel to the axis and the depressions (320) corresponding thereto are designed as grooves parallel to the axis.

4. Motor vehicle headlamp according to claim 1 to 3, **characterized in that** the guide part (400) is detachably arranged in the guide receptacle (500).

5. Motor vehicle headlamp according to one of claims 1 to 4, **characterized in that** the drive device (150) is designed as a mechanical motor, preferably with an angular gear.

6. Motor vehicle headlamp according to one of claims 1 to 4, **characterized in that** the drive device (150) is designed as an electric motor.

7. Motor vehicle headlamp according to one of claims 1 to 6, **characterized in that** the coupling element (360) is formed by a spherical head arranged concentrically to the displacement axis (X).

8. Motor vehicle headlamp according to one of claims 1 to 7, **characterized in that** the coupling element (360) is designed as a screw which can be detached from the adjusting element (300).

9. Motor vehicle headlamp according to one of claims 1 to 8, **characterized in that** the guide receptacle (500) is fixedly connected to the housing of the motor vehicle headlamp.

## Revendications

1. Projecteur de véhicule automobile comprenant un boîtier et au moins un ensemble optiquement pertinent ainsi qu'au moins un dispositif de réglage (100) pour régler l'ensemble optiquement pertinent du projecteur de véhicule automobile, lequel dispositif de réglage comprend ce qui suit :
- un dispositif d'entraînement (150) avec un élément de transmission (200) logé de manière rotative autour d'un axe de déplacement (X),
- un élément de réglage (300) en prise mécanique avec l'élément de transmission (200) au moyen d'une liaison, l'élément de réglage (300) présentant une section filetée (350) et étant en outre conçu pour s'engager sur l'unité de construction optiquement importante au moyen d'un élément de couplage (360), et
- un logement de guidage (500) ainsi qu'une pièce de guidage (400) disposée dans le logement de guidage (500) avec un contre-filetage (410) correspondant à la section filetée (350), l'élément de réglage (300) étant logé de manière à pouvoir tourner et coulisser dans le logement de guidage (500) au moyen de la pièce de guidage (400) disposée sur la section filetée (350), laquelle est conçue en combinaison avec la section filetée (350) pour transformer un mouvement de rotation de l'élément de transmission (200) en un mouvement de poussée le long de l'axe de poussée (X),
où
l'élément de réglage (300) présente au moins une saillie (310) faisant saillie radialement par rapport à l'axe de poussée (X), **caractérisé en ce que** le logement de guidage (500) présente une première et une deuxième butées (510, 520) correspondant à la saillie (310), les butées (510, 520) étant disposées sur le logement de guidage (500) de telle sorte qu'une longueur de course prédéfinie de l'élément de réglage (300) est réalisée le long de l'axe de poussée (X), où
l'élément de guidage (400) est disposé de manière fixe par rapport au boîtier du projecteur de véhicule automobile, et dans lequel
le logement de guidage (500) est conçu comme étant séparé des autres composants du dispositif de réglage (100) et est fixe par rapport au dispositif d'entraînement (150).

2. Projecteur de véhicule automobile selon la revendication 1, **caractérisé en ce que** l'élément de réglage (300) est logé au moins partiellement dans une ouverture (210) de l'élément de transmission (200), de forme sensiblement circulaire et concentrique à l'axe de déplacement, l'élément de transmission (200) présentant des languettes élastiques (250) en tant que protection contre les survirements, qui sont disposées sur le pourtour de l'ouverture (210) essentiellement circulaire et s'étendent le long de l'axe de poussée (X), les languettes élastiques (250) présentant d'autres saillies (260) qui sont conçues pour s'engager dans des creux (320) correspondants disposés sur l'élément de réglage.

3. Projecteur de véhicule automobile selon la revendication 1 ou 2, **caractérisé en ce que** les autres saillies (260) sont réalisées sous la forme de tenons parallèles à l'axe et les creux (320) qui leur correspondent sous la forme de rainures parallèles à l'axe.

4. Projecteur de véhicule automobile selon les revendications 1 à 3, **caractérisé en ce que** la pièce de guidage (400) est disposée de manière amovible dans le logement de guidage (500).

5. Projecteur de véhicule automobile selon l'une des revendications 1 à 4, **caractérisé en ce que** le dispositif d'entraînement (150) est réalisé sous la forme d'un moteur mécanique, de préférence avec un renvoi d'angle.

6. Projecteur de véhicule automobile selon l'une des revendications 1 à 4, **caractérisé en ce que** le dispositif d'entraînement (150) est réalisé sous forme de moteur électrique.

7. Projecteur de véhicule automobile selon l'une des revendications 1 à 6, **caractérisé en ce que** l'élément d'accouplement (360) est formé par une rotule disposée concentriquement à l'axe de poussée (X).

8. Projecteur de véhicule automobile selon l'une des revendications 1 à 7, **caractérisé en ce que** l'élément d'accouplement (360) est réalisé sous la forme d'une vis pouvant être détachée de l'élément de réglage (300).

9. Projecteur de véhicule automobile selon l'une des revendications 1 à 8, **caractérisé en ce que** le logement de guidage (500) est solidaire du boîtier du projecteur de véhicule automobile.
